# EUROPÄISCHE PATENTANMELDUNG

(11) **EP 3 648 307 A1**
(43) Veröffentlichungstag der Anmeldung: **06.05.2020**
(21) Anmeldenummer: 18204303.4
(22) Anmeldetag: 05.11.2018
(51) Int. Cl.: H02K 1/14, H02K 3/34

(54) **ZAHNKAPPE FÜR EINEN EINZELZAHN**

(71) Anmelder: Siemens Aktiengesellschaft, 80333 München (DE)
(72) Erfinder: Männl, Andreas, 97720 Nüdlingen (DE); Müller, Jörg, 97720 Nüdlingen (DE); Reubelt, Stefanie, 97618 Rödelmaier (DE); Wehner, Andreas, 97688 Bad Kissingen (DE)

(57) **Zusammenfassung**

Die Erfindung betrifft eine Zahnkappe (4,8) für einen Einzelzahn (2), umfassend einen Kappenfuß (7) zur Abdeckung eines Zahnfußes (71) des Einzelzahns (2), wobei der Kappenfuß (7) wenigstens eine Kappenfußerweiterung (10,11) in Umfangsrichtung (U) zur Verlängerung einer Kriechstrecke aufweist. Die Erfindung betrifft ferner einen Einzelzahn (2), einen Stator (1) und eine dynamoelektrische rotatorische Maschine (9).

## Beschreibung

Die Erfindung betrifft eine Zahnkappe für einen Einzelzahn, einen Einzelzahn, einen Stator sowie eine dynamoelektrische rotatorische Maschine.

Kleine bzw. kompakt gebaute dynamoelektrische rotatorische Maschinen, insbesondere Motoren, stellen bezüglich benötigter Luft- und Kriechstrecken eine Herausforderung dar. Denn bei höheren Spannungen sind lange Kriechstrecken erforderlich. Daher werden kleine Motoren vorzugsweise in Systemen mit einer Maximalspannung von 300 V ausgeführt. Es gilt: Je kleiner der Motor desto schwieriger ist es, die notwendigen Luft- und Kriechstrecken einzuhalten.

Es gibt jedoch die Möglichkeit, kleine Motoren in einer höheren Spannungsklasse auszuführen, indem sehr viel Isolationsmaterial verwendet wird. Dies führt jedoch zu einem erhöhten Montageaufwand sowie zu einer geringeren Leistungsdichte des Motors, da ein Bauraum des Motors durch das Isolationsmaterial weniger Platz für Aktivteile (Stator und Rotor) bietet.

Der Erfindung liegt daher die Aufgabe zugrunde, kompakt gebaute Motoren mit einer hohen Leistung bzw. hohen Leistungsdichte bereitzustellen.

Die Lösung der Aufgabe gelingt durch Anspruch 1, d.h. eine Zahnkappe für einen Einzelzahn, umfassend einen Kappenfuß zur Abdeckung eines Zahnfußes des Einzelzahns, wobei der Kappenfuß wenigstens eine Kappenfußerweiterung in Umfangsrichtung zur Verlängerung einer Kriechstrecke aufweist.

Die Lösung der Aufgabe gelingt ferner durch Anspruch 17, d.h. einen Einzelzahn für einen Stator, aufweisend wenigstens eine derartige Zahnkappe.

Ferner gelingt die Lösung der Aufgabe durch Anspruch 19, d. h. einen Stator für eine dynamoelektrische rotatorische Maschine, aufweisend eine Mehrzahl an radial angeordneten Einzelzähnen.

Die Lösung der Aufgabe gelingt überdies durch Anspruch 20, d. h. eine dynamoelektrische rotatorische Maschine, aufweisend einen derartigen Stator.

Die Erfindung ist für vorzugsweise jede dynamoelektrische rotatorische Maschine, die Einzelzähne aufweist, geeignet, beispielsweise für Synchronmaschinen.

Die dynamoelektrische rotatorische Maschine ist vorzugsweise eine permanenterregte Maschine. Jedoch ist auch eine fremderregte dynamoelektrische rotatorische Maschine denkbar.

In einer vorteilhaften Ausführungsform der Erfindung umfasst die Zahnkappe einen Kappenkopf zur Abdeckung eines Zahnkopfes des Einzelzahns sowie einen Kappenschaft zur Abdeckung eines Zahnschaftes des Einzelzahns.

Dies ist insbesondere für eine Einhaltung der notwendigen Luft- und Kriechstrecken vorteilhaft.

Der Kappenkopf, der Kappenschaft und der Kappenfuß sind vorzugsweise einstückig ausgebildet.

Der Kappenschaft ist vorzugsweise zwischen dem Kappenkopf und dem Kappenfuß angeordnet.

In einer weiteren vorteilhaften Ausführungsform der Erfindung ist eine derartige Zahnkappe an ein vorderes und/oder hinteres axiales Ende des Einzelzahns anbringbar.

Vorzugsweise ist die Zahnkappe aufsteckbar ausgeführt.

Vorzugsweise ist die Zahnkappe mit dem Einzelzahn formschlüssig verbunden. Die Zahnkappe kann auch kraft- und/oder stoffschlüssig mit dem Einzelzahn verbunden sein.

Vorteilhaft ist jeweils eine Zahnkappe am vorderen axialen Ende und am hinteren axialen Ende angebracht.

Dies gewährleistet eine gute Isolierung des jeweiligen Einzelzahns.

In einer weiteren vorteilhaften Ausführungsform der Erfindung ist die Kappenfußerweiterung derart ausgebildet, dass sie mit wenigstens einer Kappenfußerweiterung eines weiteren Kappenfußes einer weiteren Zahnkappe formschlüssig verbindbar ist.

Vorzugsweise sind der Kappenfuß und die wenigstens eine Kappenfußerweiterung einstückig ausgebildet.

In einer weiteren vorteilhaften Ausführungsform der Erfindung weist der Kappenfuß eine erste Kappenfußerweiterung und eine zweite Kappenfußerweiterung auf.

In einer weiteren vorteilhaften Ausführungsform der Erfindung weist die erste Kappenfußerweiterung einen Spund auf und die zweiten Kappenfußerweiterung eine Nut.

Diese Ausführungsform bringt insbesondere fertigungstechnische Vorteile, da sie auf einfache Weise gefertigt werden kann.

In einer weiteren vorteilhaften Ausführungsform der Erfindung ist die Nut zur passgenauen Aufnahme eines Spunds einer weiteren Kappenfußerweiterung ausgebildet.

Dies bedeutet in anderen Worten: In einer weiteren vorteilhaften Ausführungsform der Erfindung ist die Nut entsprechend einem Negativ des Spunds ausgebildet.

Dies hat den Vorteil, dass die Nut zur passgenauen - zumindest im Wesentlichen hinsichtlich unvermeidbarer Fertigungstoleranzen - Aufnahme eines Spunds einer weiteren baugleichen Kappenfußerweiterung ausgebildet ist.

In einer weiteren vorteilhaften Ausführungsform der Erfindung ist die erste Kappenfußerweiterung der Zahnkappe mit einer zweiten Kappenfußerweiterung der weiteren Zahnkappe formschlüssig verbindbar.

Ein Nutzschlitz zwischen den Einzelzähnen ist somit verschlossen.

Dies bringt mehrere Vorteile mit sich: Eine Statorwicklung, welche die Einzelzähne umgibt, ist fixiert und gegen Herausrutschen gesichert.

Ferner ist auch denkbar, dass zwischen die erste Kappenfußerweiterung der Zahnkappe und eine zweite Kappenfußerweiterung der weiteren Zahnkappe eine Phasentrennung eingebracht wird (z. B. mittels Klemmen).

Zudem ist die Statorwicklung gegen einen Rotor der dynamoelektrischen rotatorischen Maschine isoliert.

In einer weiteren vorteilhaften Ausführungsform der Erfindung ist die Nut von einem vorderen zu einem hinteren axialen Ende der ersten Kappenfußerweiterung durchführend ausgeführt.

Diese Ausführungsform bringt beispielsweise fertigungstechnische Vorteile, da sie auf einfache Weise gefertigt werden kann.

In einer weiteren vorteilhaften Ausführungsform der Erfindung ist der Spund von einem vorderen zu einem hinteren axialen Ende der zweiten Kappenfußerweiterung durchlaufend ausgeführt.

In einer weiteren vorteilhaften Ausführungsform der Erfindung ist die Nut in Axialrichtung betrachtet als eine wenigstens im Wesentlichen rechtwinklige Vertiefung ausgebildet, wobei der Spund in Axialrichtung betrachtet als ein wenigstens im Wesentlichen rechtwinkliger Überstand ausgebildet ist.

Die beschriebene Ausbildung umfasst sowohl eine im Querschnitt betrachtet dreieckige Nut bzw. einen dreieckigen Spund als auch eine viereckige Nut und einen viereckigen Spund.

Der Spund kann in Axialrichtung betrachtet alternativ auch als halbrunde Spitze ausgebildet sein. Die Nut ist dann einem Negativ des Spunds entsprechend ausgebildet.

In einer weiteren vorteilhaften Ausführungsform der Erfindung ist die Nut in Axialrichtung betrachtet als eine wenigstens im Wesentlichen rechteckige Vertiefung ausgebildet, wobei der Spund in Axialrichtung betrachtet als ein wenigstens im Wesentlichen rechteckiger Überstand ausgebildet ist.

Diese Ausführungsform ist eine besonders gute Kontur zur Verlängerung der Kriechstrecke.

In einer weiteren vorteilhaften Ausführungsform der Erfindung ist die Nut in Axialrichtung betrachtet als eine wenigstens im Wesentlichen dreieckige Vertiefung ausgebildet, wobei der Spund in Axialrichtung betrachtet als ein wenigstens im Wesentlichen dreieckiger Überstand ausgebildet ist.

In einer weiteren vorteilhaften Ausführungsform der Erfindung weist die erste Kappenfußerweiterung einen ersten in Axialrichtung betrachtet wenigstens im Wesentlichen rechteckigen Überstand auf, wobei die zweite Kappenfußerweiterung einen zweiten in Axialrichtung betrachtet wenigstens im Wesentlichen rechteckigen Überstand aufweist, wobei der erste Überstand und der zweite Überstand wenigstens im Wesentlichen deckungsgleich sind.

Deckungsgleich bedeutet hierbei, die beiden Überstände sind in Form und Größe gleich.

Vorzugsweise sind die beiden Überstände in Radialrichtung betrachtet in unterschiedlichen Höhen der jeweiligen Kappenfußerweiterung angeordnet.

In einer weiteren vorteilhaften Ausführungsform der Erfindung sind der erste Überstand und der zweite Überstand derart ausgebildet, dass der erste Überstand der Zahnkappe mit dem zweiten Überstand der weiteren Zahnkappe im Wesentlichen passgenau zusammenfügbar ist.

Vorzugsweise sind der erste Überstand und der zweite Überstand derart ausgebildet, dass der erste Überstand der Zahnkappe mit dem zweiten Überstand der weiteren Zahnkappe im Wesentlichen passgenau übereinander zusammenfügbar ist.

Durch die beschriebenen Ausführungsformen der Kappenfußerweiterung wird die Kriechstrecke am Zahnfuß künstlich verlängert. Dadurch können kompakte Motoren in höheren Spannungsklassen ausgeführt werden. Dies ist insbesondere für Anwendungsgebiete von Vorteil, die kompakte, leistungsfähige Motoren verlangen.

Anwendungsgebiete sind z. B. Werkzeugmaschinen, Produktionsmaschinen und/oder Roboter.

In einer weiteren vorteilhaften Ausführungsform der Erfindung ist der erste Überstand und/oder der zweite Überstand von dem vorderen zu dem hinteren axialen Ende der ersten bzw. zweiten Kappenfußerweiterung durchlaufend ausgeführt.

Es ist jedoch auch eine Ausführung mit Unterbrechungen möglich. Der Einzelzahn für einen Stator weist vorzugsweise wenigstens eine derartige Zahnkappe auf.

Vorzugsweise ist jeweils eine Zahnkappe sowohl am vorderen als auch am hinteren axialen Ende des Einzelzahns ausgeführt. Der Stator für eine dynamoelektrische rotatorische Maschine weist vorteilhaft eine Mehrzahl an radial um einen Mittelpunkt angeordneten Einzelzähnen auf.

In einer weiteren vorteilhaften Ausführungsform der Erfindung weist die Zahnkappe als Material wenigstens einen Kunststoff auf. Sie kann auch vollständig aus wenigstens einem Kunststoff ausgebildet sein.

Als Material sind jedoch auch andere elektrisch nicht leitfähige Materialien denkbar.

Vorzugsweise ist die Zahnkappe als Spritzgussteil gefertigt. Eine serienmäßige Herstellung der Zahnkappe ist gewünscht und, insbesondere mittels Spritzguss, möglich.

Die Zahnkappe kann auch mittels eines additiven Fertigungsverfahrens, insbesondere 3D-Druck, hergestellt sein.

Die Zahnkappe kann auch mittels eines subtraktiven Fertigungsverfahrens hergestellt sein.

Die beschriebene Zahnkappe bringt verschiedene Vorteile mit sich. Die Zahnkappe isoliert nicht nur eine Wicklung zum Einzelzahn hin, sondern auch zu einem Rotor. Zudem werden ein Drahteinlauf und eine Drahtführung erleichtert.

Die Erfindung bietet den Vorteil, dass kleine Motoren in höheren Spannungsklassen ausführbar sind, ohne dass Bauraum verloren geht. Für diese Motoren erweitert sich aufgrund ihrer Größe ein Einsatzspektrum.

Eine Herstellung des beschriebenen Stators gelingt beispielsweise wie folgt: Eine Mehrzahl an Einzelzahnsegmenten wird vorzugsweise hintereinander angeordnet (in anderen Worten: gestapelt). Ein Einzelzahnsegment ist hierbei vorzugsweise ein aus einem, insbesondere gewalzten, Großblech oder einem Schmalband (ein in der Breite gekürztes, aufgewickeltes Blechband) herausgeschnittenes oder herausgestanztes Blech. Durch die Hintereinanderanordnung von einer Mehrzahl an Einzelzahnsegmenten wird ein Einzelzahn gebildet.

Vorzugsweise werden die Einzelzahnsegmente zu einem Einzelzahn - wie einem Fachmann bekannt - paketiert. Eine Mehrzahl an Einzelzähnen wird um einen Mittelpunkt radial angeordnet zur Bildung des Stators.

Vorzugsweise ist eine Anzahl der radial angeordneten Einzelzähne ein Vielfaches von 3.

Vorzugsweise ist eine Anzahl der radial angeordneten Einzelzähne 9 oder 12.

Die Einzelzähne werden vorzugsweise mittels Schweißen miteinander verbunden.

Alternativ können die Einzelzähne auch kraftschlüssig verbunden werden oder in ein Gehäuse gepresst werden.

Vorzugsweise wird am vorderen und/oder am hinteren axialen Ende jedes den Stator bildenden Einzelzahns eine Zahnkappe aufgesteckt.

Anschließend wird vorzugsweise in die entstandenen Nutschlitze zwischen den Einzelzähnen Isolierpapier zur Isolierung der Blechpakete gegenüber der Wicklung eingebracht und die Einzelzähne umwickelt.

Anschließend werden die Einzelzähne vorteilhaft zum Stator verbunden.

Alternativ kann auch Isolierpapier auf den Einzelzahn geklebt, der Einzelzahn bewickelt und anschließend überstehendes Isolierpapier umgeklappt werden, sodass dieses die Wicklung umhüllt. Das Isolierpapier muss hierzu eine ausreichende Fläche aufweisen.

Im Folgenden wird die Erfindung anhand der in den Figuren beschriebenen Ausführungsbeispiele näher beschrieben und erläutert. Es zeigen:
- FIG 1: einen Ausschnitt einer ersten Ausführung einer Zahnkappe für einen Einzelzahn,
- FIG 2: einen Ausschnitt der ersten Ausführung der Zahnkappe, die mit einer weiteren Zahnkappe formschlüssig verbunden ist,
- FIG 3: einen Ausschnitt einer zweiten Ausführung einer Zahnkappe,
- FIG 4: einen Ausschnitt der zweiten Ausführung der Zahnkappe, die mit einer weiteren Zahnkappe formschlüssig verbunden ist,
- FIG 5: einen Ausschnitt einer dritten Ausführung einer Zahnkappe,
- FIG 6: einen Ausschnitt der dritten Ausführung der Zahnkappe, die mit einer weiteren Zahnkappe formschlüssig verbunden ist,
- FIG 7: einen Stator in einer Vorderansicht, aufweisend mit Zahnkappen versehene Einzelzähne und
- FIG 8: eine dynamoelektrische rotatorische Maschine.

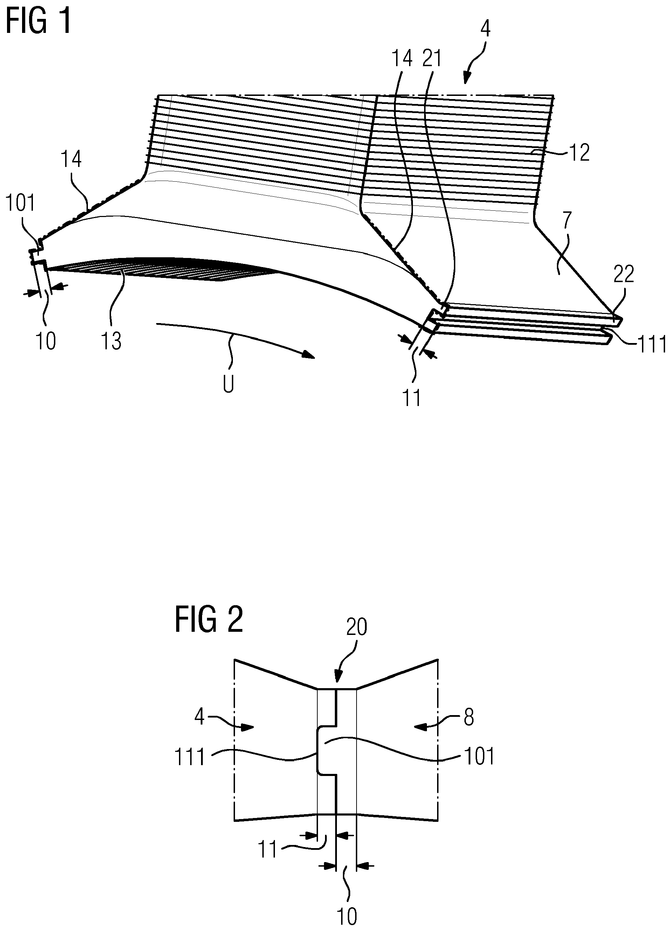

FIG 1 zeigt einen Ausschnitt einer ersten Ausführung einer Zahnkappe 4 für einen Einzelzahn.

Die Zahnkappe 4 weist eine Kappenfußerweiterung 11 auf. In der Figur ist die Kappenfußerweiterung 11 an einem in Umfangsrichtung U rechten Ende der Zahnkappe 4 gezeigt. Die Kappenfußerweiterung 11 ist von einem vorderen axialen Ende 21 der Zahnkappe 4 am Kappenfuß 7 bis zu einem hinteren axialen Ende 22 durchgängig ausgeführt und weist eine Nut 111 auf.

Die Kappenfußerweiterung 10 ist von einem vorderen axialen Ende 21 der Zahnkappe 4 bis zu einem hinteren axialen Ende 22 durchgängig ausgeführt und weist einen Spund 101 auf. Nut 111 und Spund 101 können auch am jeweils anderen Ende der Zahnkappe ausgebildet sein.

Die Zahnkappe 4 umhüllt - wie in der Figur gezeigt - das Blechpaket 13. Der Kappenschaft (und auch der Zahnschaft) sind von einem Wicklungsdraht 12, insbesondere Kupferdraht, umwickelt. Die Zahnkappe 4 ist im unteren Bereich (zu einem Rotor hin) offen. Die Zahnkappe 4 ist somit ein Isolator und schützt vor einer (ungewollten) elektrischen Verbindung von Blech und Wicklung. Blech und Wicklung sind - wie in der Figur gezeigt - getrennt. Dazwischen liegt eine Kriechstrecke 14. Die Kappenfußerweiterung mit Nut 111 und Spund 101 ermöglicht eine Verlängerung der Kriechstrecke 14.

Der Kappenfuß 7 und die Kappenfußerweiterung bzw. die Kappenfußerweiterungen 10 bzw. 11 sind vorteilhaft einstückig.

FIG 2 zeigt einen Ausschnitt der ersten Ausführung der Zahnkappe 4, die mit einer weiteren Zahnkappe 8 formschlüssig verbunden ist.

Die Zahnkappen sind vorzugsweise baugleich.

Die formschlüssige Verbindung 20 gelingt mittels einer wenigstens im Wesentlichen rechteckigen Nut 111 an der Kappenfußerweiterung 11 und einem wenigstens im Wesentlichen rechteckigem Spund 101 an der Kappenfußerweiterung 10. Da der Spund 101 passgenau in die Nut 111 greift, gelingt eine formschlüssige Verbindung 20.

Diese Ausführungsform kann labyrinthartig beschrieben werden und gewährleistet eine ausreichende Verlängerung der Kriechstrecke.

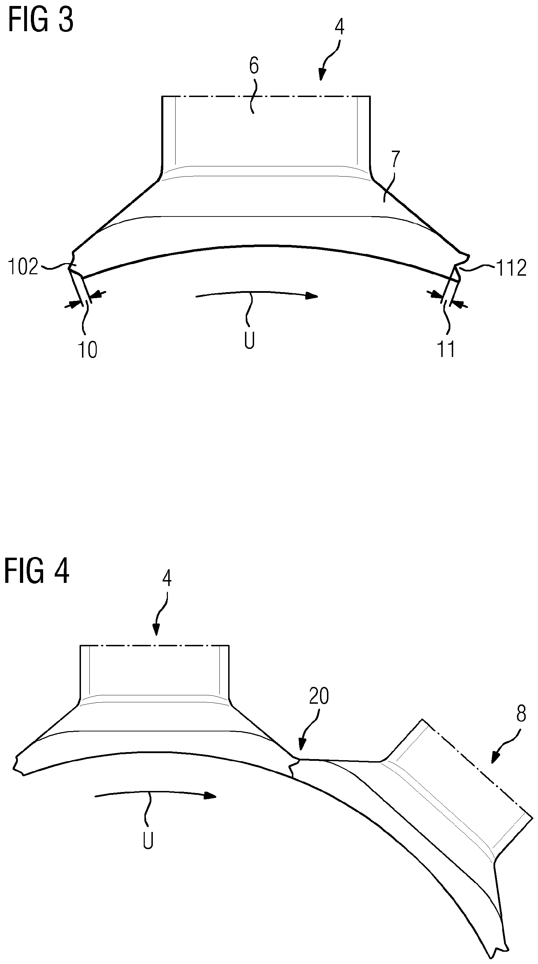

FIG 3 zeigt einen Ausschnitt einer zweiten Ausführung einer Zahnkappe 4.

In der Figur sind ein Ausschnitt eines Kappenschafts 6 und der Kappenfuß 7 dargestellt. Die Kappenfußerweiterung 10 am in Umfangsrichtung U linken Ende des Kappenfußes 7 weist einen wenigstens im Wesentlichen dreieckigen Spund 102 auf.

Die Kappenfußerweiterung 11 am in Umfangsrichtung U rechten Ende des Kappenfußes 7 weist eine wenigstens im Wesentlichen dreieckige Nut 112 auf.

In der Figur ist der Spund 102 derart ausgebildet, dass an seiner Spitze (in anderen Worten: Außenseite) ein Winkel von ca. 90 Grad ausgeführt ist. Die Nut weist in der Figur ebenso einen Winkel von ca. 90 Grad an ihrer der Zahnkappe zugewandten Seite (in anderen Worten: Innenseite) auf. Es sind jedoch auch andere Winkel möglich.

Der Spund 102 ist in einer Draufsicht vorzugsweise als gleichschenklig-dreieckige Erhebung ausgebildet. Die Nut 112 ist in einer Draufsicht vorzugsweise als gleichschenklig-dreieckige Vertiefung ausgebildet.

Nut 112 und Spund 102 können auch am jeweils anderen Ende der Zahnkappe ausgebildet sein.

FIG 4 zeigt einen Ausschnitt der zweiten Ausführung der Zahnkappe 4, die mit einer weiteren Zahnkappe 8 formschlüssig verbunden ist.

Die Figur zeigt die formschlüssige Verbindung 20 von zwei baugleichen Zahnkappen 4, 8 in der in FIG 3 gezeigten Ausführung. Eine Mehrzahl an Zahnkappen ist vorzugsweise radial entlang einer Umfangsrichtung U angeordnet.

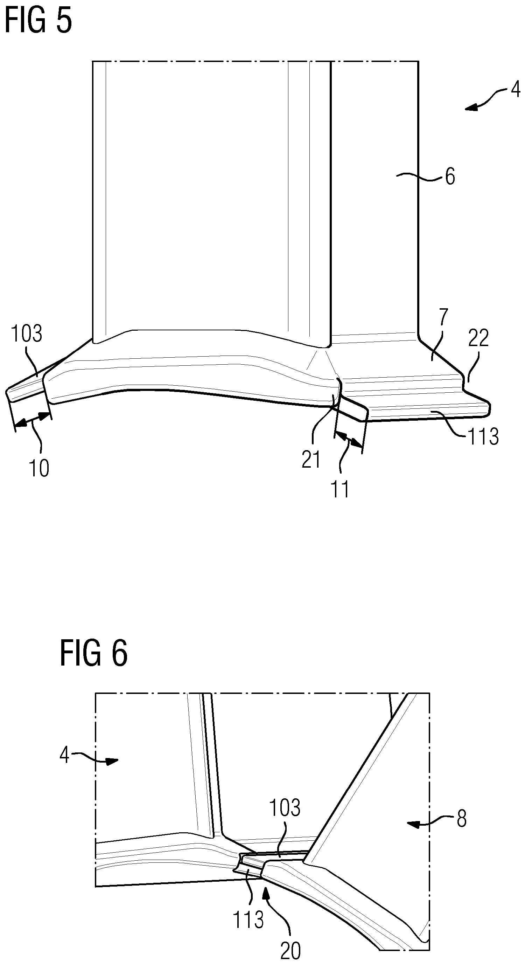

FIG 5 zeigt einen Ausschnitt einer dritten Ausführung einer Zahnkappe 4.

Die Figur zeigt einen Ausschnitt von Kappenschaft 6 und Kappenfuß 7. Die Kappenfußerweiterung 11 weist einen Überstand 113 auf bzw. ist gänzlich als Überstand 113 ausgebildet. Der Überstand 113 ist in der Figur vom vorderen 21 bis zum hinteren 22 axialen Ende ausgeführt.

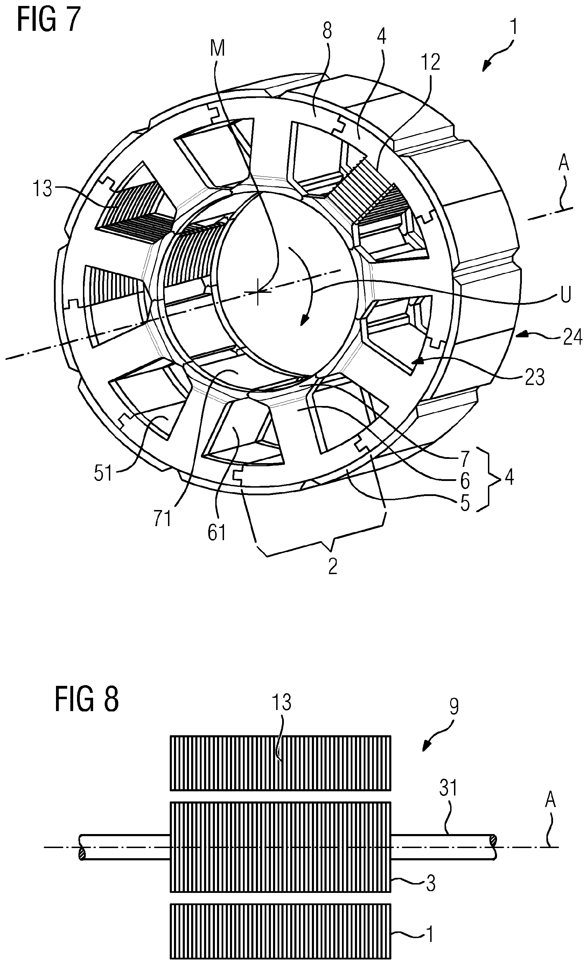

Vorzugsweise ist der Überstand 113 an einer einem Kappenkopf (Kappenkopf wird in FIG 7 gezeigt) abgewandten Seite ausgebildet.

Die Kappenfußerweiterung 10 weist einen Überstand 103 auf bzw. ist gänzlich als Überstand 103 ausgebildet. Der Überstand 103 ist in der Figur vom vorderen 21 bis zum hinteren 22 axialen Ende ausgeführt.

Vorzugsweise ist der Überstand 103 an einer dem Kappenkopf zugewandten Seite ausgebildet.

FIG 6 zeigt einen Ausschnitt der dritten Ausführung der Zahnkappe 4, die mit einer weiteren Zahnkappe 8 formschlüssig verbunden ist.

Die Figur zeigt die formschlüssige Verbindung 20 von zwei baugleichen Zahnkappen 4, 8.

An einem in Umfangsrichtung linken als auch rechten Ende der Zahnkappe ist ein Überstand ausgeführt.

Vorzugsweise ist der Überstand 113 an einer einem Kappenkopf abgewandten Seite ausgebildet. Vorzugsweise ist der Überstand 103 an einer einem Kappenkopf zugewandten Seite ausgebildet. Jedoch ist eine andere Ausbildung möglich. Die Überstände 103 und 113 können auch am jeweils anderen Ende der Zahnkappe ausgebildet sein.

FIG 7 zeigt einen Stator 1 in einer Vorderansicht, aufweisend mit Zahnkappen 4, 8 versehene Einzelzähne.

Die Figur zeigt einen Stator 1 in einer Vorderansicht, der aus Einzelzähnen 2 aufgebaut ist. Der Stator 1 (als Blechpaket 13 gefertigt) umfasst neun Einzelzähne 2, wobei vorteilhaft jeder Zahnkopf 51 des jeweiligen Einzelzahns 2 an seinem linken und rechten Ende mit jeweils einem weiteren Zahnkopf formschlüssig verbunden ist. Ein Einzelzahn 2 umfasst den Zahnkopf 51, einen Zahnschaft 61 und einen Zahnfuß 71.

Die Figur zeigt ebenso neun Zahnkappen 4, 8, wobei jede Zahnkappe an ihrem linken und rechten Ende mit jeweils einer weiteren Zahnkappe formschlüssig verbunden ist. In der Figur sind sowohl die jeweiligen Kappenköpfe 5 und Kappenfüße 7 formschlüssig verbunden. Die Verbindungen der Kappenköpfe 5 sind in der Figur beispielhaft dargestellt, jedoch sind auch andere Verbindungen denkbar.

Die Einzelzähne und somit auch die Zahnkappen 4, 8 sind um einen Mittelpunkt M radial angeordnet.

Die Figur zeigt, dass die formschlüssige Verbindung 20 der Kappenfüße 7 mittels der Ausführungen der Kappenfußerweiterungen gebildet ist, die in FIG 3 und 4 zeigt sind.

Die Figur zeigt zudem die Wicklung mit Wicklungsdraht 12 um die Einzelzähne exemplarisch an einem Einzelzahn.

FIG 8 zeigt eine dynamoelektrische rotatorische Maschine 9.

Der Rotor 3 rotiert innerhalb des Stators 1 um eine Rotationsache A. Der Stator 1 weist vorzugsweise eine Mehrzahl an den beschriebenen Einzelzähnen mit Zahnkappen auf. Die Figur zeigt zudem eine Welle 31. In der Figur sind sowohl der Rotor 3 als auch der Stator 1 als Blechpaket gefertigt.

## Patentansprüche

1. Zahnkappe (4,8) für einen Einzelzahn (2), umfassend einen Kappenfuß (7) zur Abdeckung eines Zahnfußes (71) des Einzelzahns (2), wobei der Kappenfuß (7) wenigstens eine Kappenfußerweiterung (10,11) in Umfangsrichtung (U) zur Verlängerung einer Kriechstrecke aufweist.

2. Zahnkappe (4,8) nach Anspruch 1, umfassend
- einen Kappenkopf (5) zur Abdeckung eines Zahnkopfes (51) des Einzelzahns (2),
- einen Kappenschaft (6) zur Abdeckung eines Zahnschafts (61) des Einzelzahns (2).

3. Zahnkappe (4,8) nach einem der vorhergehenden Ansprüche, anbringbar an ein vorderes (23) oder hinteres (24) axiales Ende des Einzelzahns (2).

4. Zahnkappe (4,8) nach einem der vorhergehenden Ansprüche,
wobei die Kappenfußerweiterung (10,11) derart ausgebildet ist, dass sie mit wenigstens einer Kappenfußerweiterung einer weiteren Zahnkappe formschlüssig verbindbar ist.

5. Zahnkappe (4,8) nach einem der vorhergehenden Ansprüche,
wobei der Kappenfuß (7) eine erste Kappenfußerweiterung (10) und eine zweite Kappenfußerweiterung (11) aufweist.

6. Zahnkappe (4,8) nach Anspruch 5,
wobei die erste Kappenfußerweiterung (10) einen Spund (101,102) aufweist und die zweite Kappenfußerweiterung (11) eine Nut (111,112) aufweist.

7. Zahnkappe (4,8) nach Anspruch 6, wobei die Nut (111,112) zur passgenauen Aufnahme eines Spunds (101,102) einer weiteren Kappenfußerweiterung ausgebildet ist.

8. Zahnkappe (4,8) nach einem der Ansprüche 5 bis 7, wobei die erste Kappenfußerweiterung (10) der Zahnkappe (4,8) mit einer zweiten Kappenfußerweiterung der weiteren Zahnkappe formschlüssig verbindbar ist.

9. Zahnkappe (4,8) nach einem der Ansprüche 6 bis 8, wobei die Nut (111,112) von einem vorderen zu einem hinteren axialen Ende der ersten Kappenfußerweiterung (10) durchlaufend ausgeführt ist.

10. Zahnkappe (4,8) nach einem der Ansprüche 6 bis 9, wobei der Spund (101,102) von einem vorderen zu einem hinteren axialen Ende der zweiten Kappenfußerweiterung (11) durchlaufend ausgeführt ist.

11. Zahnkappe (4,8) nach einem der Ansprüche 6 bis 10,
wobei die Nut (111,112) in Axialrichtung betrachtet als eine wenigstens im Wesentlichen rechtwinklige Vertiefung ausgebildet ist, wobei der Spund (101,102) in Axialrichtung betrachtet als ein wenigstens im Wesentlichen rechtwinkliger Überstand ausgebildet ist.

12. Zahnkappe (4,8) nach einem der Ansprüche 6 bis 11, wobei die Nut (111) in Axialrichtung betrachtet als eine wenigstens im Wesentlichen rechteckige Vertiefung ausgebildet ist, wobei der Spund (101) in Axialrichtung betrachtet als ein wenigstens im Wesentlichen rechteckiger Überstand ausgebildet ist.

13. Zahnkappe (4,8) nach einem der Ansprüche 6 bis 11, wobei die Nut (112) in Axialrichtung betrachtet als eine wenigstens im Wesentlichen dreieckige Vertiefung ausgebildet ist, wobei der Spund (102) in Axialrichtung betrachtet als ein wenigstens im Wesentlichen dreieckiger Überstand ausgebildet ist.

14. Zahnkappe (4,8) nach einem der Ansprüche 1 bis 5, wobei die erste Kappenfußerweiterung (10) einen ersten in Axialrichtung betrachtet wenigstens im Wesentlichen rechteckigen Überstand (103) aufweist, wobei die zweite Kappenfußerweiterung einen zweiten in Axialrichtung betrachtet wenigstens im Wesentlichen rechteckigen Überstand (113) aufweist, wobei der erste Überstand (103) und der zweite Überstand (113) wenigstens im Wesentlichen deckungsgleich sind.

15. Zahnkappe (4,8) nach Anspruch 14, wobei der erste Überstand (103) und der zweite Überstand (113) derart ausgebildet sind, dass der erste Überstand (103) der Zahnkappe mit dem zweiten Überstand (113) der weiteren Zahnkappe im Wesentlichen passgenau zusammenfügbar ist.

16. Zahnkappe (4,8) nach einem der Ansprüche 14 oder 15, wobei der erste Überstand (103) und/oder der zweite Überstand (113) von dem vorderen (21) zu dem hinteren (22) axialen Ende der ersten Kappenfußerweiterung (10) bzw. zweiten Kappenfußerweiterung (11) durchlaufend ausgeführt ist.

17. Einzelzahn (2) für einen Stator (1), aufweisend wenigstens eine Zahnkappe (4,8) nach einem der Ansprüche 1 bis 16.

18. Einzelzahn (2) nach Anspruch 17, aufweisend jeweils eine Zahnkappe (2) nach einem der Ansprüche 1 bis 16 am vorderen (23) und am hinteren (24) axialen Ende des Einzelzahns.

19. Stator (1) für eine dynamoelektrische rotatorische Maschine (9), aufweisend eine Mehrzahl an radial angeordneten Einzelzähnen (2) nach einem der Ansprüche 17 oder 18.

20. Dynamoelektrische rotatorische Maschine (9), aufweisend einen Stator (1) nach Anspruch 19.
